# FASCICULE DE BREVET EUROPEEN

(11) **EP 1 942 695 B1**
(45) Date de publication et mention de la délivrance du brevet: **23.05.2012**
(21) Numéro de dépôt: 07301422.7
(22) Date de dépôt: 02.10.2007
(51) Int. Cl.: H04W 8/02

(54) **Système de mobiles à deux cartes SIM**
Mobilgerätesystem mit zwei SIM-Karten
Mobile system with two SIM cards

(30) Priorité: 08.01.2007 FR 0752559
(43) Date de publication de la demande: 09.07.2008
(73) Titulaire: Halys, 75015 Paris (FR)
(72) Inventeur: Henry-Labordere, Arnaud, 75007 Paris (FR)
(74) Mandataire: Herrburger, Pierre

(56) Documents cités:
- EP-A- 1 231 800
- WO-A-00/13454
- WO-A-99/59371
- GB-A- 2 427 793
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-SA1, no. V600, janvier 2005 (2005-01), XP014027400 ISSN: 0000-0001

## Description

### Domaine de l'invention

La présente invention concerne un système de mobiles enregistrés dans un réseau (réseau nominal) avec la carte SIM et ayant une seconde carte SIM appartenant à un réseau auxiliaire, chaque mobile pouvant utiliser au choix, sa carte nominale ou sa carte auxiliaire.

Dans toute la description, on utilisera les abréviations définies ci-après et dans le glossaire.

Un abonné au système selon l'invention dispose d'un mobile A appartenant au réseau HPLMN dit réseau nominal (ou opérateur nominal) référencé HPLMNₙₒₘ dans lequel cet abonné a une carte SIM dite carte SIM nominale référencée SIMₙₒₘ.

Cet abonné a également une carte SIM d'un autre réseau HPLMN selon l'invention, appelé réseau HPLMN auxiliaire et référencé HPLMNₐᵤₓ ; la carte SIM de ce réseau auxiliaire est appelée carte SIM auxiliaire, référencée SIMₐᵤₓ.

Si l'abonné a deux cartes SIM (SIMₙₒₘ et SIMₐᵤₓ), il utilisera l'une ou l'autre suivant sa situation géographique ou des considérations économiques. Pour cela, il utilisera le même mobile A dans lequel il mettra l'une ou l'autre carte ou encore un mobile à deux cartes susceptibles d'être activées l'une ou l'autre ou encore deux mobiles ayant chacun sa carte.

Dans tous les cas :
- le mobile utilisé avec la carte SIMₙₒₘ sera appelé mobile Aₙₒₘ,
- le mobile utilisé avec la carte SIMₐᵤₓ sera appelé mobile Aₐᵤₓ.

Par convention, les termes « opérateur » et « réseau » sont synonymes.

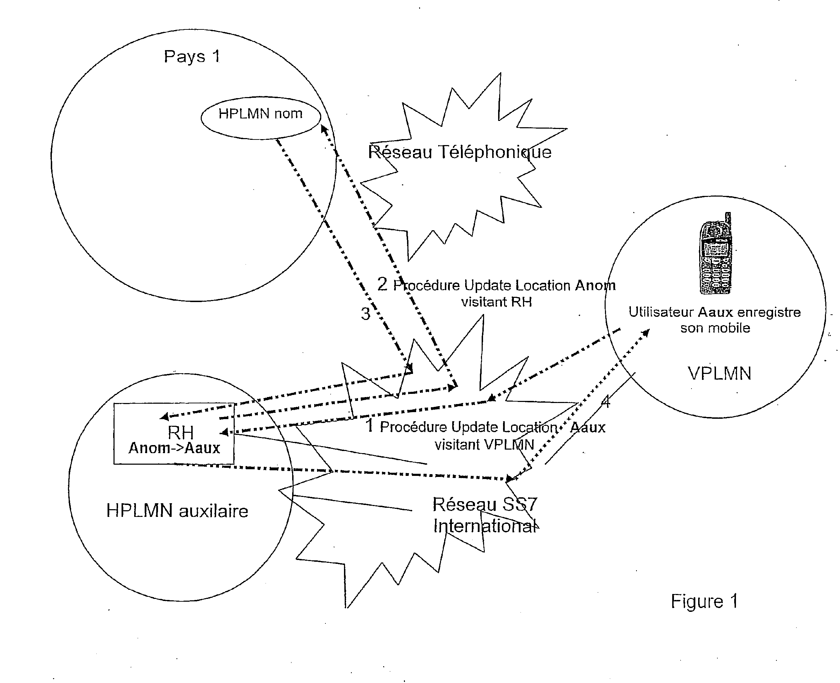

La figure 1 montre un système de téléphones mobiles existant.

Ce système utilise le Réseau International de Signalisation (réseau SS7) pour la transmission des informations de signalisation nécessaires à l'établissement d'une communication entre les téléphones mobiles et/ou fixes. Chaque réseau gère des mobiles dans un pays et plusieurs réseaux peuvent coexister dans un même pays (pays 1), chacun ayant ses abonnés, c'est-à-dire les mobiles abonnés. Suivant l'abonnement souscrit auprès de son opérateur HPLMNₙₒₘ, un mobile A appelé alors mobile Aₙₒₘ, bénéficiera de différents services de télécommunication, de messagerie, etc.

Le mobile Aₙₒₘ peut également aller dans un autre pays (pays 2). Il devient alors un mobile en itinérance et peut, le cas échéant, émettre ou recevoir des appels, à condition que son opérateur ou son réseau aient des accords d'itinérance (accords de roaming) avec un opérateur du pays visité (pays 2) et que son abonnement lui fournisse ce service. L'opérateur HPLMNₙₒₘ sera automatiquement informé par son correspondant du réseau visité VPLMN de la présence active du mobile Aₙₒₘ. Ces informations transmises par le réseau de signalisation SS7 vers l'opérateur nominal HPLMNₙₒₘ, sont transmises par une requête UPDATE LOCATION du réseau visité VPLMN qui reçoit en retour les caractéristiques du mobile Aₙₒₘ en itinérance, c'est-à-dire les services auxquels le mobile Aₙₒₘ a droit, les références de ce mobile et autres paramètres permettant à l'opérateur VPLMN de gérer provisoirement le mobile Aₙₒₘ pendant sa présence dans son réseau visité et de facturer l'opérateur HPLMNₙₒₘ des services utilisés par son abonné en visite.

A chaque appel émis vers le mobile Aₙₒₘ dans le réseau visité VPLMN, ce mobile reçoit un numéro d'itinérance RN_{A} (« roaming number » en anglais) qui est un numéro provisoire, attribué par le réseau visité VPLMN au mobile A. Cette information provisoire est transmise au réseau HPLMNₙₒₘ et sert pour établir l'appel.

### Etat de la technique

Actuellement recevoir un appel quand un mobile visite un pays (réseau VPLMN) autre que celui de son réseau est coûteux par rapport à la gratuité de réception des appels dans le pays d'origine(réseau HPLMN nominal). Aussi bien quand on répond à l'appel que quand on n'y répond pas, croyant ainsi éviter une dépense. En effet, si le mobile Aₙₒₘ dispose d'une Messagerie Vocale VMS, l'appel est renvoyé depuis le pays visité et le mobile Aₙₒₘ est facturé de l'appel du réseau HPLMN vers le réseau VPLMN et aussi de l'appel en retour du réseau VPLMN vers le réseau HPLMN vers sa Messagerie Vocale VMS.

Le système GSM connu, avec une seule carte SIM est décrit complètement dans les standards du système GSM. Il n'est donc pas rappelé. Les abonnés payent le coût d'un appel international pour recevoir des appels à l'étranger (alors que c'est gratuit quand ils sont dans leur propre réseau), et ils payent un tarif souvent élevé quand ils émettent un appel lors d'un déplacement à l'étranger, car celui-ci est facturé par le VPLMN à leur HPLMN à un tarif dit IOT (« Inter Operator Tariff ») qui peut atteindre 3 ou plus Euros/minute.

Il existe déjà des systèmes à plusieurs numéros IMSI (avec une ou plusieurs cartes SIM auxiliaires) qui permettent aussi de « garder le numéro habituel » (FR 03 07 710). Selon la figure 2, ils utilisent une plate-forme RH installée dans le réseau de la carte SIM auxiliaire qu'on veut activer quand on est en itinérance. Dans ces systèmes connus, l'activation de la carte « SIM auxiliaire » sert non à faire des économies, mais parce que la carte « SIM principale » n'a pas d'itinérance dans le pays visité alors que la carte SIM auxiliaire en dispose. Par ailleurs, ces systèmes connus à plusieurs numéros IMSI n'ont aucun dispositif particulier et ne permettent aucune économie par rapport au coût des appels émis alors que l'utilisateur est en itinérance.

D'autres système comme celui décrit au document GB-A-2 427 793 [Vodafone PLC (GB) 3 janvier 2007] utilisent à côté du HPLMN nominal (A) un troisième réseau auxiliaire C, le réseau visité (roaming) étant B.

Mais le but de la réalisation de ce système est complètement différent et est plutôt ce que l'on appelle aujourd'hui du « Steering of roaming » (pilotage de l'itinérance).

C'est toujours l'IMSI nominal de l'abonné qui est utilisé et le réseau nominal A effectue un transfert de l'enregistrement de son abonné au début sur B, vers le « réseau favori » C, plutôt que de le laisser sur B, dans le but d'économiser des transmissions.

Contrairement à cela, le but de la présente invention est de proposer un système dans lequel c'est l'abonné mobile qui active une autre IMSI (ou le mobile automatiquement) « auxiliaire » différent de son « IMSI nominal » du réseau A.

### But de l'invention

L'invention a pour but de
- permettre à un mobile de recevoir à faible coût des appels quand il visite un autre pays,
- avoir un renvoi peu coûteux en Messagerie Vocale,
- continuer à recevoir normalement ses SMS et en envoyer,
- émettre des appels moins coûteux quand il visite un pays,
- ne pas changer de numéro de mobile.

### Exposé et avantages de l'invention

A cet effet, la présente invention concerne un système de mobiles caractérisé en ce qu'il est en forme de réseau auxiliaire (HPLMNₐᵤₓ) comprenant
- une plateforme (RH) ayant un commutateur téléphonique mobile (MSC), un registre de localisation en visite (VLR), un registre de localisation principal (HLR) et un centre de messages courts (SMSC) ne servant qu'à la réception pour relayer des messages (SMS-MO),
- au moins un commutateur auxiliaire (GW-GMSC) installé dans chacun des pays dans lesquels le service du réseau auxiliaire est offert,
   * le réseau auxiliaire ayant des accords d'itinérance avec des réseaux nominaux (HPLMNₙₒₘ) et des réseaux visités (VPLMN) ainsi que des accords avec des opérateurs du Réseau Téléphonique International RTI (OP-RTI),
- un programme de gestion selon lequel
   * la plateforme (RH) enregistre la localisation du mobile (A) avec la carte SIMₐᵤₓ en visite dans un réseau (VPLMN) et met à jour le registre (HLRₙₒₘ) du réseau nominal (HPLMNₙₒₘ) du mobile (A) pour lui indiquer le réseau auxiliaire (HPLMNₐᵤₓ) comme réseau visité et plus précisément RH comme VLR puis commander un renvoi inconditionnel des appels reçus vers le commutateur GW-GMSC dans le but de faire passer tous les appels entrant à destination du numéro Aₙₒₘ de (A) par le commutateur auxiliaire (GW-GMSC) dans le pays du réseau nominal HPLMNₙₒₘ, ce commutateur choisissant l'un des opérateurs du réseau RTI pour l'émission des appels échangés vers le mobile Aₐᵤₓ en itinérance (appels entrants et appels sortants), de façon à optimiser les coûts.

L'avantage principal est que l'utilisateur garde son abonnement et sa carte SIMₙₒₘ. Si le réseau HPLMNₐᵤₓ n'a pas assez d'accords d'itinérance, l'invention se généralise. La deuxième carte SIM auxiliaire peut comporter plusieurs IMSI, de réseaux, le réseau HPLMNa1, le réseau HPLMNa2.

Dans ce cas, des plateformes RH1, RH2, etc.. seront installées dans chacun de ces différents réseaux. Lors d'un déplacement la logique embarquée dans le téléphone à deux cartes SIM choisit automatiquement le réseau le réseau HPLMNa1, le réseau HPLMNa2, etc...

Ainsi, l'invention concerne un réseau pour abonnés GSM disposant soit d'un terminal mobile de type à deux cartes SIM simultanées installées en permanence dans leur terminal, soit de deux terminaux mobiles, chacun avec une carte SIM, soit en changeant de carte SIM.

Le réseau permet dans ces trois cas, une terminaison transparente des communications reçues sur le numéro nominal (IMSI Nominal), qui ne change pas et est le seul connu.

Le réseau permet aussi d'optimiser les coûts à la fois des appels reçus à l'étranger, efficaces ou non (renvoi en Messagerie Vocale), et les coûts des appels émis.

L'optimisation déclenchée en activant la carte SIMₐᵤₓ à l'étranger, sans que le numéro associé à cette carte soit jamais utilisé explicitement ou connu de l'utilisateur du service ou des ses correspondants pour recevoir des appels téléphoniques ou messages courts ou pour en émettre. Le réseau permet que le numéro nominal Aₙₒₘ soit affiché comme origine dans les appels reçus par les correspondants bien que la carte SIM auxiliaire soit activée.

Aussi, le réseau permet la commande transparente des téléservices du numéro nominal, bien que la carte SIM auxiliaire soit activée et l'envoi de message SMS vers tous les réseaux partenaires de son HPLMN nominal.

En outre, tous les appels vers le numéro nominal aboutissent, au prix d'un simple appel local, vers ce commutateur local et l'exploitant du service s'est arrangé pour avoir des coûts inférieurs quand c'est lui qui fait l'appel.

Suivant une autre caractéristique avantageuse, la plate-forme (RH) comporte certaines fonctions, à savoir celles d'un commutateur (MSC), d'un registre de localisation en visite (VLR), d'un registre de localisation principal (HLR) et d'un centre de messages courts (SMSC) ne servant qu'à la réception pour relayer des messages (SMS-MO), et est installée dans le réseau (HPLMNₐᵤₓ) qui fournit la carte (SIMₐᵤₓ) et le commutateur (GW-GMSC) a des fonctions commandables à distance de commutateur téléphonique pour optimiser des appels téléphoniques reçus à l'étranger ou émis.

Suivant une autre caractéristique avantageuse, un programme (STK) est embarqué dans le mobile.

Suivant une autre caractéristique avantageuse, les appels téléphoniques vers le mobile qui a activé sa carte sont automatiquement renvoyés sur le commutateur GW-GMSC le mieux placé pour l'optimisation et si celui-ci est dans le pays du mobile Aₙₒₘ, le coût de tout appel reçu à l'étranger, vers leur numéro nominal, est celui d'un appel depuis leur pays vers le numéro local du commutateur.

Suivant une autre caractéristique avantageuse, le mobile (Aₐᵤₓ) avec sa carte (SIMₐᵤₓ) activée, dispose des services supplémentaires de son réseau (HPLMNₙₒₘ) et utilise le service du centre des messages courts (SMSC) de son le réseau (HPLMNₙₒₘ) lui assurant pour le service de messages (SMS), la même couverture en réception et en émission qu'avec l'utilisation de la carte (SIMₙₒₘ).

Suivant une autre caractéristique avantageuse, l'adresse de messagerie vocale inscrite pour la carte SIMₐᵤₓ dans le HLR du HPLMN auxiliaire est celle du commutateur GW-MSC dans le pays du HPLMNₙₒₘ du mobile et quand un appel, émis vers A_{aux,} échoue, sa carte SIM auxiliaire ayant été activée, l'appel arrive sur ce commutateur, qui le renvoie automatiquement vers la messagerie vocale nominale de son réseau au coût d'un appel local.

Suivant une autre caractéristique avantageuse, un appel émis par le mobile en itinérance est remplacé par un rappel déclenché d'une façon gratuite et ouverte dans tout réseau dans lequel la carte est activée par une fonction REGISTER-SS utilisée normalement pour programmer les renvois d'appels et qui est ouverte partout, le rappel étant effectué par le commutateur le mieux placé pour l'optimisation des coûts qui insère, comme « Calling Party Address (CLI) » dans le message d'appel vers le destinataire B, le « numéro nominal » Aₙₒₘ du mobile, le programme embarqué du mobile effectuant d'une façon cachée, les opérations nécessaires à l'établissement d'appel optimisé (ergonomie transparente).

Suivant une autre caractéristique avantageuse l'optimisation du coût des appels vers les mobiles visitant le même pays est aussi obtenue grâce à un programme (STK) et à la plateforme (RH), le programme (STK) demandant à la plateforme (RH), le numéro d'itinérance (RN de B) du destinataire pour effectuer un appel local vers ce numéro temporaire, la plateforme (RH) décidant ou non d'utiliser le procédé de rappel selon la revendication 7, la transmission entre le programme (STK) et la plateforme (RH) se faisant par un signal REGISTER-SS avec une extension pour avoir une réponse contenant le numéro d'itinérance (RN de B).

Suivant une autre caractéristique avantageuse, la plate-forme est sécurisée, lisible seulement avec des autorisations, et est la seule à avoir les correspondances entre numéros de l'utilisateur, IMSI nominal, numéro nominal dans le réseau HPLMNₙₒₘ d'un côté, IMSI auxiliaire et numéro auxiliaire dans le réseau le réseau HPLMNₐᵤₓ de l'autre, et l'utilisateur étant connu seulement sous le numéro auxiliaire par le VPLMN, sans que la correspondance avec le numéro nominal soit connue du VPLMN.

Ainsi grâce à la plate-forme RH sécurisée, il y a vis à vis de relevés du trafic, soit dans le VPLMN, soit dans le réseau HPLMNₙₒₘ, l'impossibilité de les corréler, l'utilisateur « numéro nominal » visitant systématiquement le MSC-VLR de la plateforme RH vis à vis du réseau HPLMNₙₒₘ, quel que soit le VPLMN réellement visité.

En déportant RH dans une région A où arriveront les deux signalisations concernant nominal puis auxiliaire ou auxiliaire puis nominal, il n'y a que là que la corrélation peut être faite directement. La fourniture additionnelle d'un cryptage de bout en bout de la communication téléphonique peut être ajoutée au service pour sécuriser d'avantage les communications téléphoniques qui sont déjà chiffrées en standard par l'algorithme GSM ou plus généralement ceux utilisés pour les communications de mobiles

Schématiquement, le principe de l'invention est le suivant: la deuxième carte auxiliaire, quand elle s'enregistre (« s'allume »), force la carte nominale à visiter un VLR auxiliaire (RH dans les informations du HLR nominal). Ensuite, ce VLR auxiliaire force un renvoi d'appel inconditionnel vers un commutateur local fourni par l'exploitant du service.

Dans tous pays (France, Royaume Uni, Emirats, etc...) où l'opérateur HPLMNₐᵤₓ veut offrir son service aux abonnés des différents réseaux de mobile existant, à des bonnes conditions, tant pour lui que pour eux, il installe une passerelle GW-GMSC capable de recevoir et d'émettre des appels téléphoniques (selon le protocole standard ISUP, RNIS ou autres), avec des coûts avantageux.

Pour optimiser l'émission des appels, il y a deux méthodes:

### 1^{ère} méthode

un programme embarqué de type STK (voir Glossaire) a été chargé dans le mobile des abonnés du service. Ce qui fait que le mobile au lieu de faire un appel ordinaire vers le numéro appelé déclenche un rappel vers lui-même et un appel vers le destinataire, la somme des deux coûts étant inférieure à l'appel connu. Cela automatise donc ce que font certains enfants qui appellent brièvement leurs parents depuis l'étranger en demandant qu'on les rappelle.

### 2^{ème} méthode

Pour optimiser l'émission des appels vers un mobile compatriote aussi dans le même pays, l'invention va permettre au mobile abonné d'obtenir le numéro temporaire local (en Chine par exemple) de ce mobile et d'appeler celui-ci au lieu de son numéro nominal(en France par exemple), avec appel direct vers un numéro chinois. La ligne la plus courte est bien sûr la moins chère.

### Dessins

La présente invention sera décrite ci-après de manière plus détaillée à l'aide d'un mode de réalisation représenté dans les dessins annexés dans lesquels :
- la figure 1 représente le principe de procédure d'enregistrement des systèmes connus à plusieurs numéros IMSI,

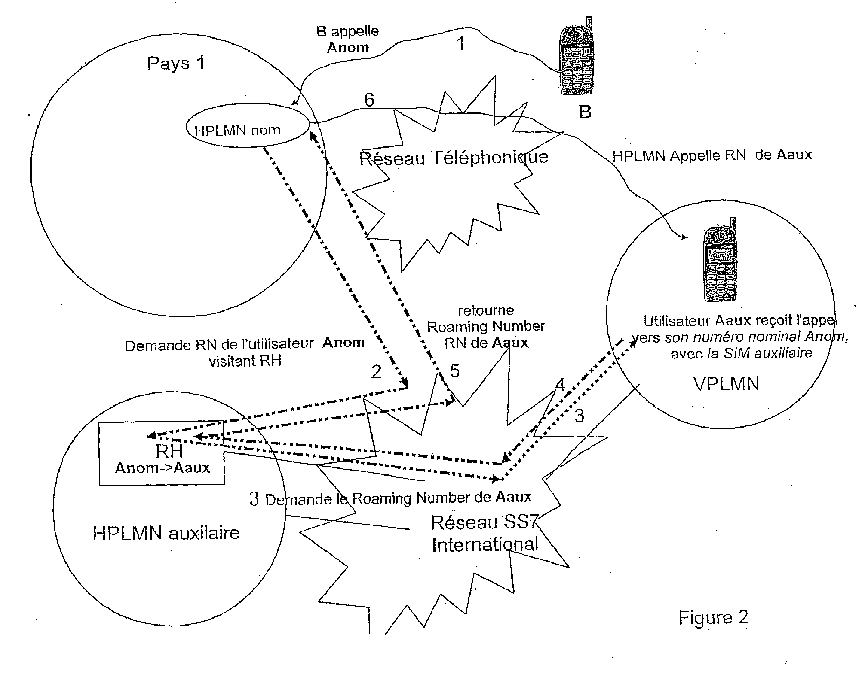

- la figure 2 représente la réception d'un appel vers un mobile avec les systèmes,
- la figure 3 représente les éléments constitutifs du réseau de l'invention,
- la figure 4 représente la procédure d'enregistrement de la carte SIM auxiliaire selon la présente invention,
- la figure 5 représente un appel reçu d'une façon transparente sur le numéro nominal d'un mobile alors que la carte SIM auxiliaire est activée,
- la figure 6 représente un appel renvoyé vers le VMS nominale en minimisant le coût,
- la figure 7 représente la procédure d'appel à coût optimisé avec demande de rappel,
- la figure 8 représente un autre cas d'appel à coût optimisé d'un destinataire en visite dans le même pays que le mobile appelant,
- la figure 9 représente l'activation transparente des téléservices du réseau nominal alors que la carte SIM auxiliaire est activée,
- la figure 10 montre l'utilisation du centre SMSC du réseau nominal alors qu'avec la carte SIM auxiliaire est activée, et
- la figure 11 présente le détail du format nécessaire pour la demande de rappel « REGISTER-SS Call Back ».

### Description de modes de réalisation

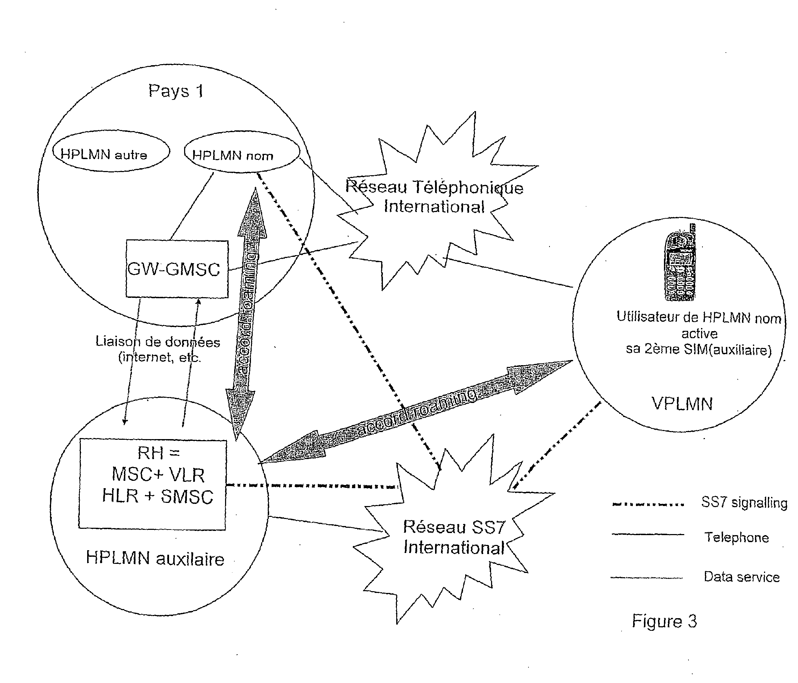

La présente invention sera d'abord décrite de manière schématique à l'aide des figures 3 à 10 puis, de manière plus détaillée.

Selon la figure 3, le système selon l'invention se compose d'un réseau d'abonnement auxiliaire HPLMNₐᵤₓ rattaché au Réseau International de Signalisation SS7 et ayant une plateforme RH avec un commutateur téléphonique mobile MSC, un registre de localisation en visite VLR, un registre de localisation principal HLR et un centre de messages courts SMSC ne servant qu'à la réception pour relayer des messages SMS-MO.

Cette plateforme RH communique avec un ou plusieurs commutateurs auxiliaires GW-GMSC (ou plus simplement GW), installés dans différents pays ayant des opérateurs en accord d'itinérance avec le réseau auxiliaire HPLMNₐᵤₓ; ils communiquent avec la plateforme RH par une liaison de données, par exemple INTERNET. Ces commutateurs GW reçoivent les appels du réseau nominal HPLMNₙₒₘ du pays dans lequel ils sont installés.

Un seul commutateur auxiliaire GW-GMSC a été représenté à la figure 3.

Le réseau auxiliaire HPLMNₐᵤₓ a des accords d'itinérance avec le réseau nominal HPLMNₙₒₘ et avec un réseau visité VPLMN. Le réseau auxiliaire HPLMNₐᵤₓ a d'autres accords d'itinérance mais pour la description de l'invention, un seul exemple a été représenté.

Un mobile Aₙₒₘ du réseau HPLMNₙₒₘ a une carte SIM appelée carte nominale SIMₙₒₘ qui identifie ce mobile vis-à-vis du réseau HPLMNₙₒₘ. Cette carte contient le numéro IMSI correspondant à l'identité du mobile Aₙₒₘ dans le réseau HPLMNₙₒₘ et permet au mobile Aₙₒₘ, d'appeler puisqu'il est identifié et aussi d'être appelé par d'autres mobiles ou téléphones fixes.

Mais ce mobile A a également une seconde carte SIM appelée carte auxiliaire SIMₐᵤₓ auprès du réseau HPLMNₐᵤₓ. Lorsque le mobile A utilise sa carte SIM nominale SIMₙₒₘ, il est en liaison avec son réseau nominal HPLMNₙₒₘ et utilise les services qu'il a souscrit auprès de ce réseau ; il sera désigné par la référence Aₙₒₘ.

Si le mobile A veut utiliser sa carte SIMₐᵤₓ du réseau HPLMNₐᵤₓ, il active cette carte et, pour les besoins de la description, il portera alors la référence Aₐᵤₓ, pour indiquer qu'il appartient maintenant au réseau auxiliaire HPLMNₐᵤₓ. Toutefois, le numéro d'identification international Aₐᵤₓ associé à la carte SIMₐᵤₓ, est inconnu du mobile A et n'est pas communiqué à des tiers, il sera réservé au seul fonctionnement du réseau HPLMNₐᵤₓ. En d'autres termes, le mobile A ne pourra être appelé que par son numéro Aₙₒₘ que lui a attribué le réseau nominal HPLMNₙₒₘ.

L'invention permet non seulement au mobile A de bénéficier des services du réseau nominal HPLMNₙₒₘ bien qu'il utilise la carte SIMₐᵤₓ, mais aussi d'être appelé par son numéro Aₙₒₘ de sa carte SIMₙₒₘ bien qu'il ait activé sa carte SIMₐᵤₓ

La gestion de ces fonctionnalités est assurée par un ensemble de programmes de gestion de RH dans le réseau auxiliaire HPLMNₐᵤₓ et d'applications enregistrées dans le mobile A activé avec la carte SIMₐᵤₓ.

Dans le cas le plus simple, le mobile A visite le pays 2 et est activé. Le réseau du pays visité VPLMN transmet alors la présence du mobile A par le réseau international SS7 vers le réseau auxiliaire HPLMNₐᵤₓ. Cette information est enregistrée dans le registre MLR de la plateforme RH qui, à son tour, informe le réseau nominal HPLMNₙₒₘ de la présence du mobile Aₙₒₘ, mais dans le VLR de RH(réseau auxiliaire HPLMNₐᵤₓ).

Ainsi, pour le réseau nominal HPLMNₙₒₘ, le mobile A activé avec la carte SIMₐᵤₓ (mobile Aₐᵤₓ) apparaît alors comme visitant le réseau auxiliaire HPLMNₐᵤₓ. Cette situation reste enregistrée dans le registre HLR du réseau nominal HPLMNₙₒₘ jusqu'à un nouveau changement, si le mobile A utilise maintenant la carte SIMₙₒₘ.

La plateforme RH commande alors le HLR de Aₙₒₘ pour un renvoi inconditionnel vers GW-MSC de tous les appels entrants à destination du mobile Aₙₒₘ .

Le fonctionnement du système de mobiles selon l'invention sera décrit ci-après pour différents cas d'utilisation.

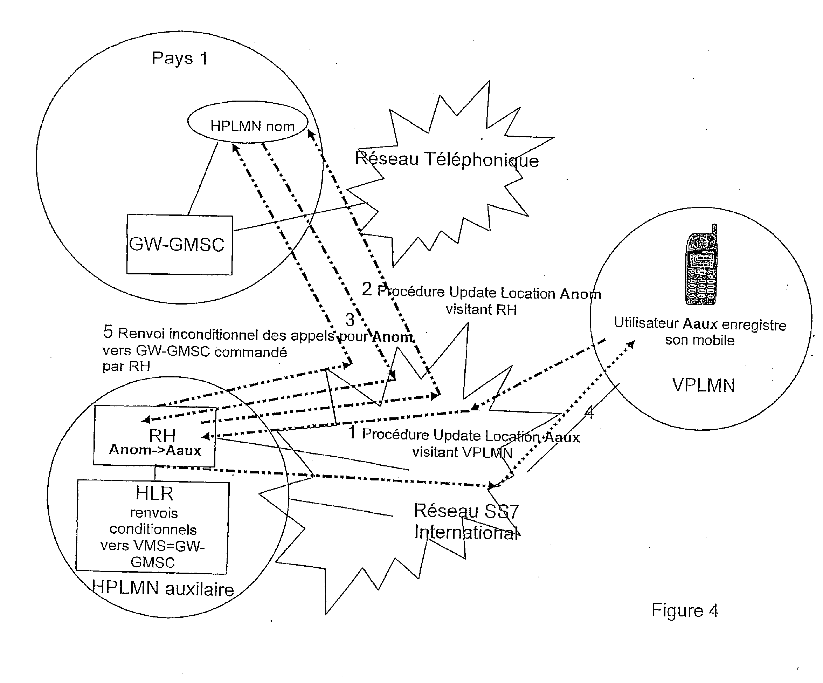

La figure 4 montre le cas d'un mobile A inscrit dans le réseau nominal HPLMNₙₒₘ et aussi dans le réseau auxiliaire HPLMNₐᵤₓ. Il a une carte SIMₐᵤₓ et en visite dans le réseau VPLMN, il active son mobile avec cette carte SIMₐᵤₓ. La procédure de mise à jour du réseau nominal HPLMNₙₒₘ est ainsi déclenchée: le mobile Aₐᵤₓ utilisant sa carte SIMₐᵤₓ, et met à jour automatiquement le registre de localisation HLR dans la plateforme RH, à sa mise en marche dans le réseau VPLMN. La plateforme RH met à jour son registre HLR avec l'adresse actuelle du mobile Aₐᵤₓ. Puis, la plateforme RH s'adresse au réseau nominal HPLMNₙₒₘ pour lui indiquer non pas le VLR de Aₐᵤₓ dans le VPLMN mais sa propre adresse RH comme VLR. Il indique également au réseau nominal HPLMNₙₒₘ le commutateur auxiliaire GW auquel doit être adressé tout appel destiné au mobile Aₙₒₘ (renvoi inconditionnel). Ce commutateur auxiliaire GW-GMSC est géré par l'équipement RH.

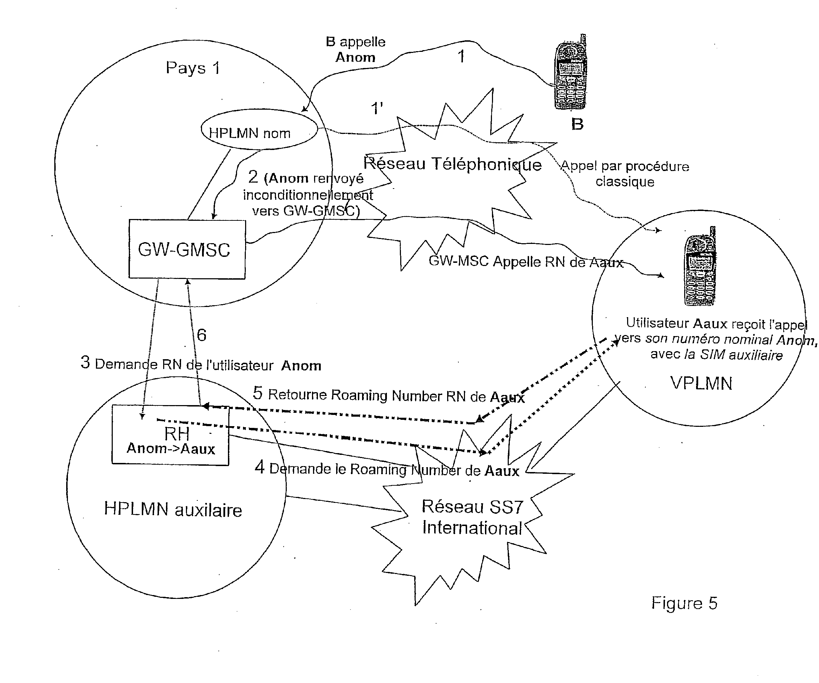

La figure 5 présente le traitement d'un appel entrant à destination du mobile Aₐᵤₓ en itinérance et ayant activé sa carte SIMₐᵤₓ :

Un mobile B appelle le mobile Aₐᵤₓ. Pour cela, il appelle le mobile A sous son identité Aₙₒₘ puisque le mobile B ne connaît que le numéro nominal du mobile A, qui lui a été attribué par son réseau nominal HPLMNₙₒₘ. Sans le système selon l'invention, le réseau nominal HPLMNₙₒₘ ferait une transmission d'appel par la procédure classique à travers le réseau téléphonique international, c'est-à-dire Internet (téléphonie par voie IP) RTI (OP-RTI) jusqu'à destination du mobile Aₙₒₘ en itinérance dans le réseau VPLMN. Cela suppose que le mobile A n'a pas activé sa carte SIMₐᵤₓ mais est resté sur la carte SIMₙₒₘ. L'inconvénient de cette transmission déjà évoqué est que le mobile Aₙₒₘ peut ne pas être accessible car il n'y a pas d'accord d'itinérance entre son opérateur et un opérateur du pays visité et si la liaison est possible, le mobile appelé Aₙₒₘ subit la tarification forte à travers le prix que lui facture HPLMNₙₒₘ pour cet appel.

Mais selon l'invention, dans le cas où le mobile A, affilié au réseau auxiliaire HPLMNₐᵤₓ en visite dans le réseau VPLMN a activé sa carte SIMₐᵤₓ, l'appel entrant du mobile B dans le réseau HPLMNₙₒₘ n'est pas transmis directement au mobile Aₐᵤₓ mais est renvoyé inconditionnellement au commutateur auxiliaire GW-GMSC. Celui-ci demande à RH, par une liaison de données comme Internet, le numéro d'itinérance du mobile Aₐᵤₓ dans le réseau visité VPLMN et établit la communication à travers le réseau téléphonique international c'est-à-dire Internet (téléphonie par voie IP) en utilisant les opérateurs OP-RTI choisis par le réseau HPLMNₐᵤₓ. Dans ces conditions, le mobile appelé A ne paiera à HPLMNₙₒₘ que le prix d'une communication locale puisqu'il y a simplement un appel local entre le réseau HPLMNₙₒₘ et le commutateur auxiliaire GW-GMSC.

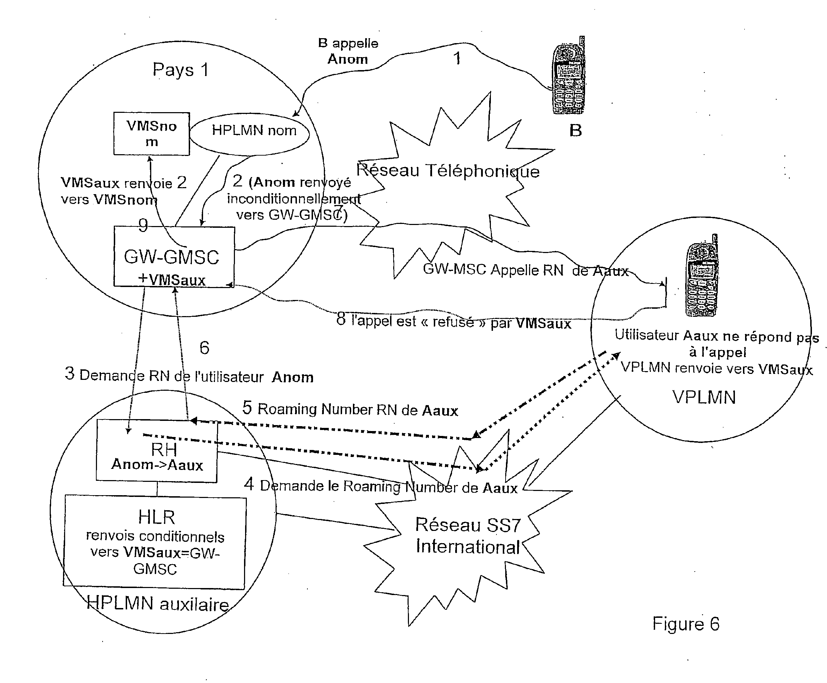

La figure 6 décrit un renvoi d'appel vers la boîte vocale du mobile Aₐᵤₓ en itinérance dans le réseau VPLMN s'il n'est pas joignable.

Le mobile B s'adresse comme précédemment au réseau nominal HPLMNₙₒₘ puisqu'il ne connaît que le numéro de la carte SIMₙₒₘ du mobile appelé Aₙₒₘ. Le réseau nominal HPLMNₙₒₘ renvoie l'appel vers GW-GMSC qui est le passage inconditionnel de tout appel vers le mobile Aₐᵤₓ lorsque celui-ci a activé sa carte SIMₐᵤₓ. Le commutateur GW - GMSC appelle le mobile Aₐᵤₓ sous son numéro d'itinérance RN de Aₐᵤₓ qu'il a demandé à RH, en passant par le réseau téléphonique RTI. Le réseau visité VPLMN traite cet appel entrant et cherche à joindre le mobile Aₐᵤₓ avec ce numéro d'itinérance RN de Aₐᵤₓ. Comme le mobile Aₐᵤₓ est supposé maintenant non joignable, le réseau VPLMN fait un renvoie vers le numéro de VMS contenu dans le profil de l'abonné Aₐᵤₓ, c'est à dire le numéro de GW-GMSC, ce qui crée une boucle (« tromboning » en anglais). Pour éviter cette boucle coûteuse (l'appel VPLMN -> GW-SMSC surtout), le commutateur GW-GMSC refuse l'appel entrant venant du VPLMN mais juste avant de refuser, il renvoie l'appel reçu de B par l'intermédiaire du réseau HPLMNₙₒₘ vers l'adresse de la boîte vocale VMSₙₒₘ du mobile Aₙₒₘ dans le réseau HPLMNₙₒₘ. L'appel du mobile B est ainsi enregistré directement dans la messagerie vocale du réseau nominal HPLMNₙₒₘ. Cette procédure évite ainsi, comme cela se passe sans le système de mobiles selon l'invention, que l'appel du mobile B vers la boîte vocale nominale VMSₙₒₘ du mobile Aₙₒₘ en itinérance dans le réseau VPLMN passe du réseau nominal HPLMNₙₒₘ vers le réseau VPLMN puis du réseau VPLM vers la boîte vocale VMSₙₒₘ.

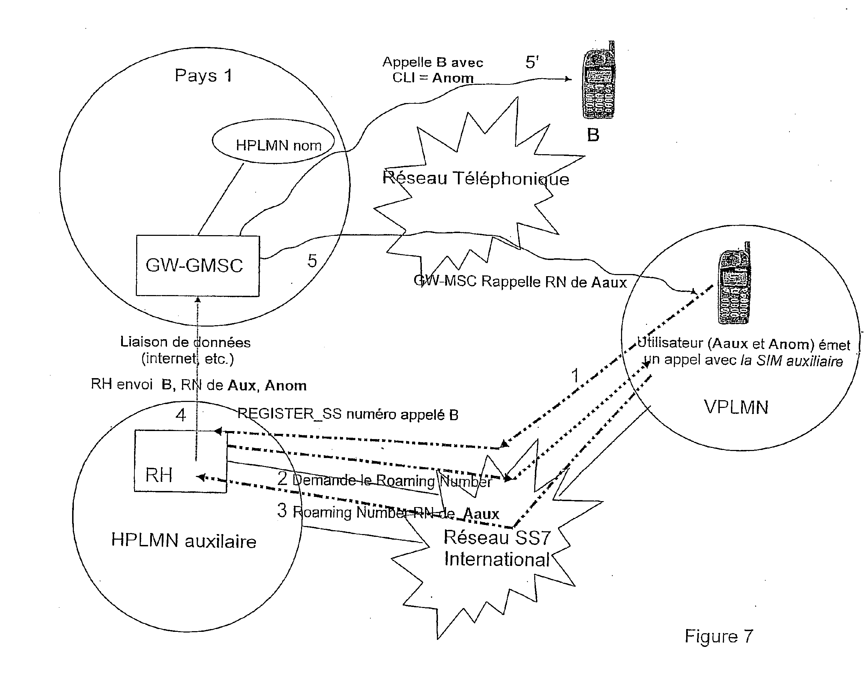

La figure 7 décrit la procédure d'appel d'un mobile Aₐᵤₓ en itinérance dans un réseau VPLMN vers un mobile B. Cette procédure est gérée par les programmes du réseau auxiliaire HPLMNₐᵤₓ et par un programme d'application intégré au mobile A dans son état Aₐᵤₓ.

Le mobile Aₐᵤₓ est supposé en itinérance dans le réseau VPLMN et a activé sa carte SIMₐᵤₓ. La localisation a été transmise au réseau auxiliaire HPLMNₐᵤₓ qui a mis à jour le réseau nominal HPLMNₙₒₘ.

Pour appeler le mobile B, le mobile Aₐᵤₓ utilise la procédure de signalétique REGISTER-SS avec le numéro du mobile B appelé à la place du paramètre « Forwarding Number »(Numéro de renvoi). Cette information arrive automatiquement dans la plateforme RH qui transmet au commutateur auxiliaire GW associé au réseau nominal HPLMNₙₒₘ, à la fois le numéro du mobile B et le numéro d'itinérance RNa du mobile Aₐᵤₓ ainsi que sa référence Aₙₒₘ dans le réseau nominal HPLMNₙₒₘ.

A partir de ces informations, le commutateur GW appelle le mobile B en passant par le réseau téléphonique international RTI et une fois la communication établie, le commutateur GW-GMSC rappelle le mobile Aₐᵤₓ en utilisant son numéro d'itinérance RN de Aₐᵤₓ et en passant par le réseau téléphonique international. Les 2 appels vers B et vers RN de Aₐᵤₓ sont alors connectés par GW-GMSC. Le mobile Aₐᵤₓ pourra ainsi s'adresser au mobile B à travers le commutateur GW-GWMSC.

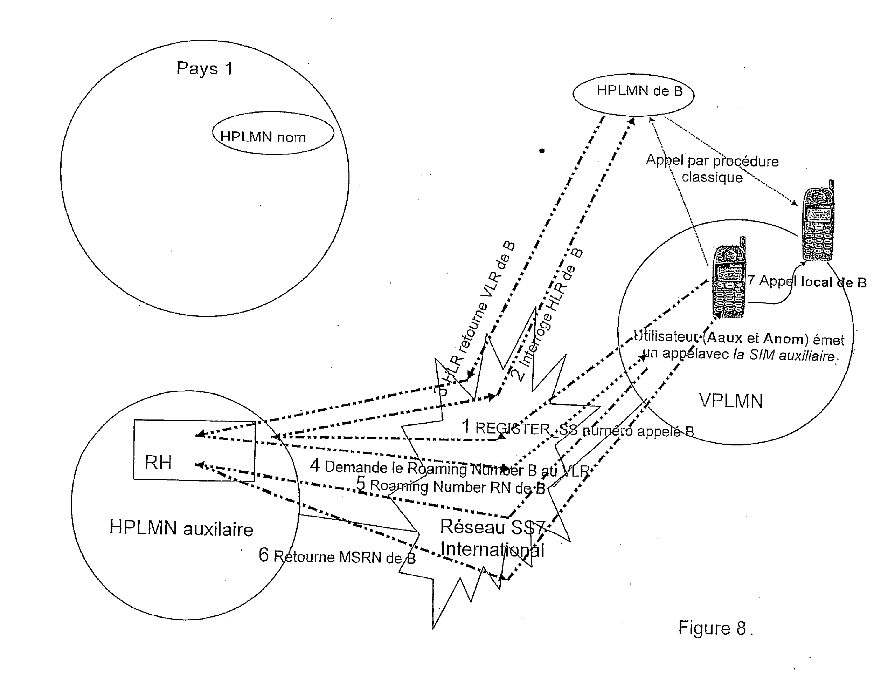

La figure 8 montre le cas d'un mobile Aₐᵤₓ en itinérance dans un réseau VPLM et qui veut s'adresser à un autre mobile B en itinérance dans le même réseau VPLMN cette fois-ci.

Pour cela, le mobile Aₐᵤₓ transmet le numéro du mobile appelé B par le message de signalétique REGISTER SS à la plateforme RH qui interroge le réseau HPLMN_{B} de B lui indiquant le numéro local RN de B du mobile appelé B. Le mobile Aₐᵤₓ fait alors automatiquement par son programme intégré (STK) un appel local vers B.

La transmission des requêtes et des réponses précédant l'établissement de la liaison locale entre le mobile A vers le mobile B se fait par le réseau international de signalisation SS7.

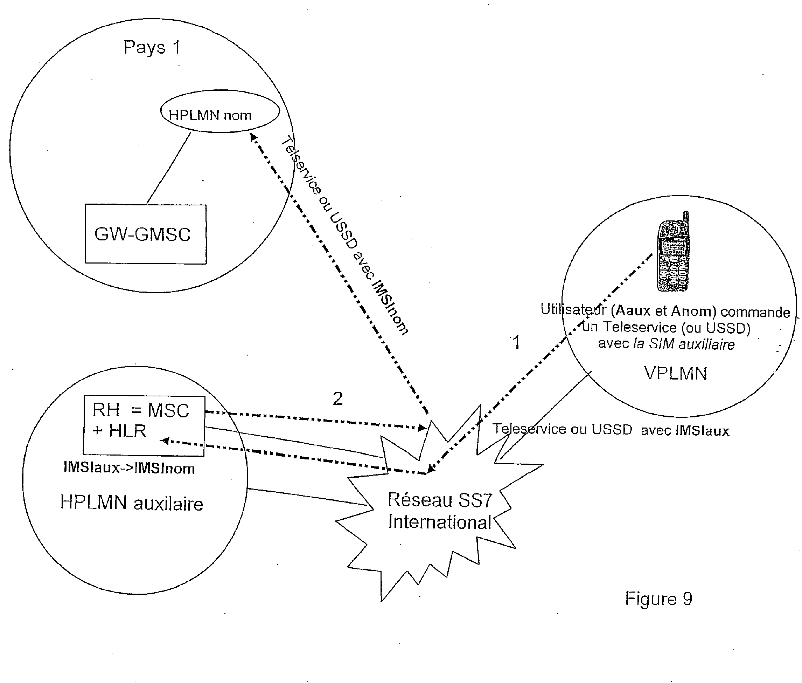

La figure 9 décrit l'activation transparente des téléservices du réseau nominal lorsque le mobile Aₐᵤₓ est en itinérance.

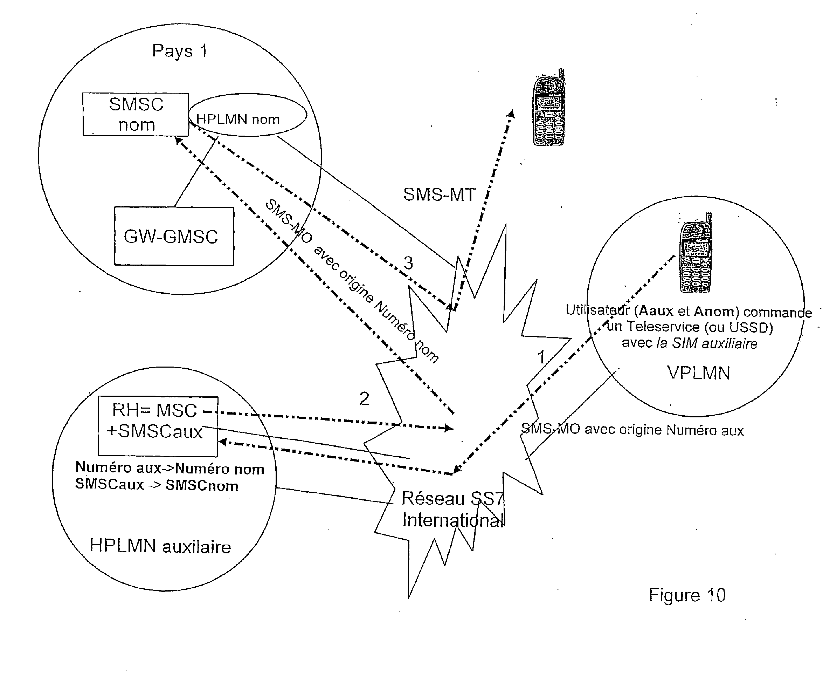

La figure 10 décrit la procédure d'envoi d'un message court SMS-MO à partir du mobile Aₐᵤₓ en itinérance dans le réseau VPLMN à travers la plateforme RH qui se présente vis-à-vis du centre SMSCₙₒₘ du réseau HPLMNₙₒₘ comme le MSC visé émetteur du message SMS-MO de façon que le SMS puisse être transmis par le centre SMSCₙₒₘ du réseau HPLMNₙₒₘ avec toutes les possibilités du réseau nominal disponible pour son mobile Aₙₒₘ.

L'invention sera décrite ci-après de manière très détaillée à l'aide des différents messages de signalisation, de requêtes et d'informations échangés entre un mobile et les composants du réseau.

### Configuration préalable des numéros auxiliaires dans le HPLMN auxiliaire

Le réseau le réseau HPLMNₐᵤₓ attribue des cartes SIMₐᵤₓ ordinaires pour le service, que les abonnés activent quand ils se déplacent à l'étranger, simplement le numéro MSISDN n'est pas communiqué aux utilisateurs.

Pour optimiser le coût du renvoi d'appels sur la Messagerie Vocale (VMS) nominale, le numéro de la boîte VMS pour le renvoi conditionnel d'appels dans les trois cas (non-réponse, occupation, non joignable) est préalablement initialisé avec celui du commutateur GW-MSC du pays du mobile Aₙₒₘ.

### Enregistrement d'un mobile dans le VPLMN (figure 4)

Le client active (allume) (1) son mobile qui contient la carte SIM auxiliaire quand il arrive dans le pays visité. Il a pu aussi s'il a un deuxième téléphone, activé celui avec sa carte SIMₙₒₘ. Cela n'a pas d'importance. Il recevra des appels seulement sur le mobile avec la carte SIMₐᵤₓ. La carte SIMₐᵤₓ attribuée par le réseau le réseau HPLMNₐᵤₓ pour le service, doit être identifiable des autres par une tranche distincte d'IMSI.

Le réseau le réseau HPLMNₐᵤₓ configure la table E214 de son commutateur GMSC pour que la signalisation reçue pour toutes les cartes SIM qu'il émet pour être utilisées comme SIM auxiliaire soient dirigées vers RH, plutôt que sur le vrai registre HLR. Ceci est obligatoire pour que les messages MAP appartenant à la famille «MAP Functional SS Package » arrivent directement sur RH.

### 1^{ère} étape:

- Les messages de signalisation « SEND AUTHENTICATION » puis « UPDATE LOCATION » (1) arrivent donc sur RH, qui note l'activation de la carte SIMₐᵤₓ,
- RH transmet au vrai HLR du réseau HPLMNₐᵤₓ qui retourne le profil vers le registre VLR (à travers RH) du VPLMN pour mettre en oeuvre la procédure normale d'enregistrement.
- Qui répond (4) au SEND AUTHENTICATION puis à UPDATE LOCATION émis par le réseau VPLMN

### 2^{ème} étape :

Ensuite, la plateforme RH qui doit connaître le numéro IMSIₙₒₘ du mobile A dans son réseau HPLMNₙₒₘ peut faire une procédure normale d'enregistrement du mobile dans son propre réseau, le réseau HPLMNₐᵤₓ en faisant la procédure SEND AUTHENTICATION puis UPDATE LOCATION (2) vers le réseau HPLMNₙₒₘ. Pour celui-ci, son abonné visite le réseau HPLMNₐᵤₓ et plus précisément, RH comme le registre VLR. Pour RH, le mobile visite le VPLMN où se trouve réellement le mobile. Le réseau HPLMNₙₒₘ répond par (3) à RH.

Cette localisation statique est faite une fois pour toute, tant que la carte SIMₐᵤₓ est active, même si l'utilisateur change de registre VLR ou de réseau VPLMN, jusqu'au moment où le mobile réactive sa carte SIMₙₒₘ et que RH reçoit un signal CANCEL LOCATION venant de son réseau HPLMNₙₒₘ (on le reconnaît par l'adresse du HLR qui l'émet).

A cette étape, les appels ou messages émis vers le numéro du mobile, arriveraient à RH qui pourrait les rediriger, mais il n' y a pas forcément d'économie pour l'utilisateur sur le coût de réception des appels en itinérance (appel HPLMₙₒₘ -> le réseau HPLMNₐᵤₓ, au lieu du réseau HPLMNₙₒₘ -> VPLMN).

C'est là qu'intervient une autre partie de l'invention pour faire le routage optimal économisant les coûts

### 3^{ème} étape :

La plateforme RH choisit le commutateur GW-GMSC qui est dans le pays du HPLMNₙₒₘ, effectue une procédure standard de renvoi inconditionnel (5) des appels téléphoniques (en utilisant le numéro IMSI nominal) pour le numéro nominal vers le numéro de ce commutateur GW-GMSC. Si celui-ci est dans le même pays que le réseau HPLMNₙₒₘ, ce réseau ne facture à son abonné, qu'un appel local alors qu'il visite un autre pays et permet de réduire les coûts.

### Réception d'un appel téléphonique (figure 5)

Le commutateur GW-GMSC est un commutateur téléphonique avec une liaison de données (INTERNET qui est gratuit, etc...) pour interroger RH. L'appel (à cause du renvoi inconditionnel vers le commutateur GW-GMSC) y aboutit toujours.

Le réseau HPLMNₙₒₘ reçoit l'appel (1) vers le numéro nominal Aₙₒₘ. Il effectue un renvoi inconditionnel (2) vers le commutateur GW-GMSC puisque précédemment un renvoi automatique avait été télécommandé par RH.

A travers la liaison de données, le commutateur GW-GMSC interroge RH (3) avec le Numéro nominal qu'il a reçu dans le champ « numéro appelé d'origine » du message d'appel (ISUP ou RNIS), et obtient (6) le numéro temporaire RN de Aₐᵤₓ attribué par le VPLMN pour cet appel. Le commutateur GW-GMSC fait alors lui-même l'appel (7) vers le mobile à des conditions plus avantageuses que l'appel (1'). L'utilisation d'INTERNET pour la liaison GW-GMSC ->RH simplifie la réalisation puisque le fonctionnement de GW-GMSC est purement téléphonique et n'a pas besoin de liaison SS7.

### Renvoi économique vers la Messagerie Vocale nominale (figure 6)

L'invention va permettre que les appels non répondus, ou bien si l'abonné n'est pas joignable ou ne répond pas, soient renvoyés sur sa messagerie vocale de son réseau HPLMNₙₒₘ, alors que la SIMₐᵤₓ est activée. Et ceci au coût d'un appel local commutateur GW-GMSC -> réseau HPLMNₙₒₘ, au lieu du coût HPLMNₙₒₘ -> VPLMN + VPLMN - > HPLMNₙₒₘ (c'est-à-dire 2 appels internationaux).

Pour cela, le profil d'abonné dans le réseau HPLMNₐᵤₓ a comme numéro de messagerie vocale celui du commutateur GW-GMSC (programmation des transferts d'appels sur « occupé », « non-réponse » ou « non joignable ») .L'émission d'un nouvel d'un appel (qui crée une boucle), non réussi (1), (2), (7) puis (8),qui est fait par le réseau VPLMN arrive donc vers le commutateur GW-GMSC, qui reconnaît que c'est un renvoi par VPLMN de l'appel qu'il avait lancé vers RN de Aₐᵤₓ. Grâce au champ « numéro appelé d'origine » qui est égal à Aₐᵤₓ, qui a été valorisé par le VLR du VPLMN, RH ayant mémorisé au moment de faire l'appel, la correspondance Aₐᵤₓ -> RN de Aₐᵤₓ.

Il lui suffit de rejeter cet appel entrant (8), et de faire un appel (9) vers le vrai numéro de Messagerie Vocale VMSₙₒₘ de l'utilisateur Aₙₒₘ, dans le même pays, au coût d'un appel local. On peut ainsi remplacer un coût de plusieurs Euros par minute (qui serait payé par l'utilisateur sans le bénéfice de l'invention) par un coût très inférieur (appel local dans son pays).

Par rapport à l'état de la technique, il n'y a pas besoin de sondes pour lire la signalisation et on n'utilise pas le RESUME CALL HANDLING du protocole MAP pour faire le transfert d'appel vers la Messagerie Vocale de l'Utilisateur, car le commutateur GW-GMSC a le contrôle de l'appel sortant (7) vers RN de Aₐᵤₓ puisqu'il l'effectue lui-même.

### Réception d'un message SMS

Le centre SMSC du réseau HPLMNₙₒₘ interroge le registre HLR nominal, qui retourne le numéro IMSI nominal et le MSC visité = RH. Le FORWARD SM MT est donc envoyé à la plateforme RH qui fait la transformation:
IMSIₙₒₘ -> IMSIₐᵤₓ
puis
MSC GT visité =MSC visité du VPLMN
et envoie donc le signal FORWARD SM MT vers le réseau VPLMN. La réponse de résultat arrive sur RH qui la retransmet d'une façon transparente au centre SMSC nominal pour réessai éventuel. La procédure complète est ainsi relayée par RH.

L'utilisateur continue donc à recevoir tous les messages SMS émis par son centre SMSC nominal, partout où sa carte SIMₐᵤₓ est activée.

### Emission d'un appel téléphonique par une procédure de rappel REGISTER-SS (figure 7)

Au lieu de faire des appels, toujours coûteux à partie d'un mobile en visite dans autre pays,on déclenche un rappel (Call Back). Cette technique est bien connue. Mais dans l'invention la méthode utilisée pour le rappel, est nouvelle. Elle assure à la fois gratuité et disponibilité dans tout VPLMN. C'est pour cela qu'on n'utilise pas l'USSD bien connu. Car celui-ci est barré par de nombreux opérateurs de mobiles et n'est donc plus utilisable en général. On utilise un autre service gratuit le "renvoi d'appel" qui est toujours disponible car c'est un service de base.

Pour effectuer un appel, le mobile Aₐᵤₓ avec la carte SIMₐᵤₓ effectue la commande de renvoi inconditionnel d'appel en mettant le numéro d'appel comme destination du renvoi. Cette commande ne déclenchera cependant pas le renvoi, mais sert seulement à transmettre gratuitement le numéro à appeler B.

Pour que l'ergonomie reste aussi simple qu'avec l'appel téléphonique connu, l'invention comporte un programme de type « SIM Tool Kit » chargé dans le mobile qui masque cette utilisation cachée du MAP REGISTER-SS.

Un message de type MAP REGISTER-SS (pas facturé par VPLMN) est déclenché (1) par le SIM Tool Kit du mobile et adressé par l'adresse E214 de RH qui est le HLR pour ce mobile. RH reçoit donc le numéro IMSIₐᵤₓ du mobile appelant et le numéro de la personne appelée B. Avec le numéro IMSIₐᵤₓ, RH obtient (2) puis (3) le numéro temporaire de la carte SIMₐᵤₓ dans le VPLMN (qui s'appelle Roaming Number (RN de Aₐᵤₓ)) par la procédure standard.

RH envoie (4) ces deux informations: B et RN de Aₐᵤₓ ainsi que Aₐᵤₓ et Aₙₒₘ (cela sert pour le renvoi optimisé en messagerie vocale) + le numéro nominal, soit 4 informations en tout, vers le commutateur GW-GMSC qui est optimal pour minimiser la somme des deux coûts : l'appel vers le destinataire B et le rappel de l'appelant Aₐᵤₓ. Il n'effectue pas réellement le renvoi d'appel inconditionnel, la procédure a simplement pour but de transmettre gratuitement le numéro à appeler et une identification de la personne à rappeler.

La plateforme RH transmet donc (4) au commutateur GW-GMSC:
- le numéro appelé B (par exemple USA)
- le numéro d'itinérance RN de Aₐᵤₓ à rappeler (par exemple numéro Suisse si l'appelant visite un VPLMN suisse),
- le numéro de l'appelant Aₐᵤₓ dans le réseau HPLMNₐᵤₓ (par exemple Luxembourg) (pour l'optimisation du renvoi en VMS)
- le numéro nominal Aₙₒₘ de l'appelant (pour être présenté à l'appelé).

Le commutateur GW-GMSC effectue l'appel (5') vers le destinataire B en mettant comme numéro d'origine CLI le Numéro nominal (Aₙₒₘ sur la figure 7) et non pas le Numéro auxiliaire Aₐᵤₓ,. et le rappel (5') vers l'appelant avec le numéro RN de Aₐᵤₓ.

L'appelé voit que l'appelant est le "Numéro nominal" (le seul connu), ce qui est un but recherché.

Comme déjà indiqué, le numéro auxiliaire ne s'affiche jamais vers une personne appelée. L'utilisateur du service n'a même jamais besoin de le connaître et l'exploitant du réseau HPLMNₐᵤₓ ne lui fournira pas.

Les trois autres cas de renvoi d'appels (non joignable, pas de réponse ou occupé) sont traités normalement en les renvoyant au HLR auxiliaire, qui répond en mettant à jour le profil dans le VPLMN (par exemple changement de temporisation pour le cas « non-réponse »).

L'expression USSD call-back en anglais pour « rappel par USSD » est répandue ; selon l'invention, il s'agit de « REGISTER-SS call-back » ce qui est très différent car ce service appartient à une autre famille (« Package ») de services, ceux-là toujours ouverts.

### Emission d'un appel à coût local vers un mobile du même pays visité (figure 8)

Si la personne appelée est dans le même pays que le mobile Aₐᵤₓ du service, qui l'appelle, il peut être plus économique de faire un appel local, plutôt qu'un rappel par le commutateur GW-GMSC. Le programme « SIM Tool Kit (PROGRAMME STK) » qui aura été chargé dans le mobile des abonnés va gérer la procédure en effectuant dans le mobile A, la procédure de Routage Optimal [3] qui n'est pas faite dans le VPLMN, car ce n'est pas forcément son intérêt économique.

Comme précédemment, le PROGRAMME STK lance un REGISTER-SS vers la plateforme RH (1). La plateforme RH interroge le réseau HLR de B (2) et obtient (3) l'adresse du réseau VLR visité par le mobile B et son numéro IMSI. La plateforme RH peut calculer s'il est plus économique de faire un rappel (comme précédemment) ou retourner au mobile A le numéro local temporaire (« Roaming Number RN ») du mobile B. S'il choisit l'appel local, il interroge (4) le VLR du mobile B (retourné en 5). Puis il retourne (6) au mobile A le numéro local temporaire RN (dans une extension de la réponse REGISTER-SS Ack). Le programme STK de A effectue alors (7) un appel à coût local au destinataire B. Dans la procédure GSM ordinaire classique sans Routage (« Optimal « Optimal Routeing »), le coût aurait été pour le mobile A, l'appel vers le réseau HPLMN_{B} du mobile B et pour le mobile B l'appel de son réseau HPLMN_{B} vers le réseau VPLMN. Les mobiles A et B bénéficient donc du service à coût optimisé et ici c'est devenu gratuit pour le mobile B.

Par contre, comme il n'y a pas de rappel c'est le numéro auxiliaire Aₐᵤₓ qui s'affiche sur le mobile de B et pas son numéro nominal Aₙₒₘ comme avec la procédure précédente. Pour garantir le service de transparence, on peut préférer la procédure de rappel dans tous les cas. On pourrait aussi dans le profil du HLR de Aₐᵤₓ déclarer Aₙₒₘ comme numéro à la place de Aₐᵤₓ. Techniquement c'est simple (le numéro et l'IMSIₐᵤₓ ne sont pas liés), mais on perd alors l'avantage que le VPLMN ne connaît jamais Aₙₒₘ qui serait utilisé pour les appels locaux ou pour l'émission de SMS par cette méthode. Par contre, le procédé décrit peut avantageusement être mis en oeuvre sans HPLMNₐᵤₓ, par un réseau pour fournir le Routage Optimal en itinérance à ses propres abonnés.

La transmission entre le programme STK et la plate-forme RH se fait par un REGISTER-SS avec une Extension Container"(voir Glossaire) dans une réponse pour contenir le « roaming number ». Elle pourrait aussi se faire avec une requête PRO-CESS_USSD_PROCESS_REQUEST standard, mais la fonction USSD n'est pas ouverte partout.

### Emission d'un appel vidéo (3G UMTS) par une procédure de rappel.

Dans le numéro de renvoi inconditionnel, s'il veut appeler en vidéo 3G UMTS (norme 3G-H324M ou autre), l'appelant met une indication convenue en tête du numéro qu'il transmet à la plateforme RH par REGISTER-SS.

La plateforme RH ajoute cette indication aussi dans le numéro d'appelé qu'il transmet au commutateur GW-GMSC. Celui-ci s'en sert pour mettre les paramètres correspondant à un « appel vidéo » dans les deux appels qu'il effectue.

### Utilisation transparente des téléservices du réseau le réseau HPLMNₙₒₘ (figure 9)

Ces services adressent le registre HLR avec le numéro IMSI, le numéro n'étant pas utilisé dans ce cas

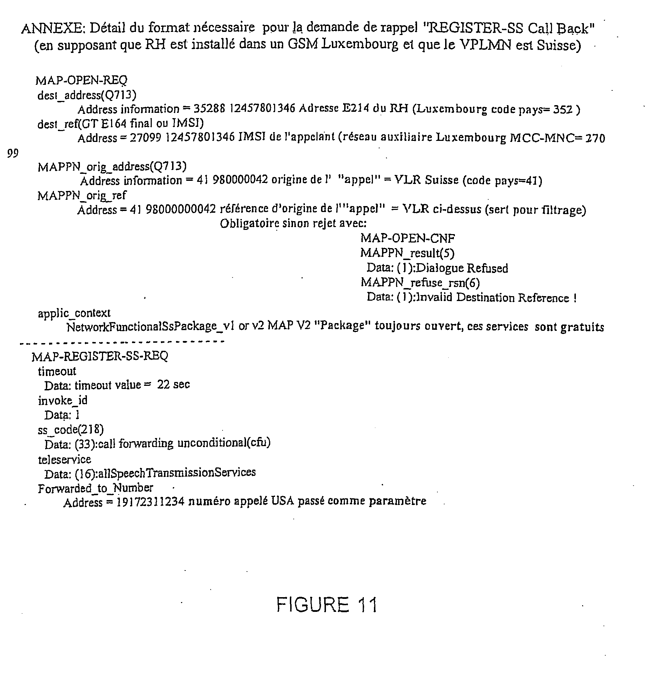

La demande(1) qui contient le numéro IMSI est envoyée (adresse E214) au registre RH qui est le HLR pour les utilisateurs du service quand leur SIM auxiliaire est activée. Celui transforme l'adressage et remplace le numéro IMSIₐᵤₓ par IMSIₙₒₘ et le renvoi (2) vers le HLR nominal. Par contre le téléservice « renvoi inconditionnel d'appel » est neutralisé par RH. Le format détaillé est important et donné par la Figure 11.

### Même destinations offertes pour l'envoi de message SMS qu'avec l'utilisation de la carte nominale (figure 10)

Cette figure 10 est presque identique à la figure 9, mais pour l'envoi des messages SMS. Dans la carte SIMₐᵤₓ, c'est RH qui est le Centre de message SMSC. Le message SMS-MO (1) arrive donc sur RH qui effectue :
SMSC auxiliaire ->SMSC nominal
et pour le numéro d'origine du SMS
Aₐᵤₓ -> Aₙₒₘ
Et la plateforme RH , agissant (ce qu'il est vis à vis du réseau HPLMNₙₒₘ) comme un MSC visité, envoie (2) le message SMS-MO vers le SMSC nominal, qui est accepté et l'envoie comme un message SMS-MT, (3). Les destinations habituelles pour l'utilisateur, restent les mêmes. En termes financiers, ceci est équilibré pour le réseau HPLMNₐᵤₓ, il est facturé par VPLMN pour le message SMS-MO émis par la carte SIMₐᵤₓ, et il facture (RH étant le MSC visité) le réseau HPLMNₙₒₘ pour le message SMS-MO relayé avec Numéro nominal comme adresse d'origine. Le centre SMSC acceptera donc le message SMS-MO (venant d'un des ses abonnés) y compris s'il a un système anti-fraude qui vérifie que l'abonné visite vraiment la plateforme RH, car c'est l'adresse qui est effectivement dans le registre HLR nominal.

### REFERENCES

[1] Digital Cellular Telecommunication System(Phase 2+) Mobile Application Part (MAP) Specification (3GPP TS 29.002 version 5.9.0 Release 5), www.etsi.org
[2] Customised Enhanced Logic (CAMEL) Phase 2, GSM 03.78, www.etsi.org
[3] Support of Optimal Routing (SOR), 3G TS 22.079, www.etsi.org
[4]"Système de transmission d'informations entre les téléphones mobiles d'opérateurs de réseau non liés par des accords d'itinérance ",Arnaud Henry-Labordère, brevets FR 03 07710, BE 2003/0378.
[5]"Système Optimisant le coût du Renvoi Tardif d'Appels",vers une messagerie vocale de mobile(SORTA)", HALYS FR 05 51804.

### GLOSSAIRE et ABBREVIATIONS UTILISEES

« Call Back »: Procédure de rappel consistant à établir une communication gratuite ou à faible coût avec un commutateur en lui passant le numéro à rappeler (l'émetteur de l'appel) et le numéro à appeler.
CANCEL LOCATION. Service du Protocole MAP servant à un HLR à annuler les informations d'un abonné qui étaient stockés sur le VLR précédent lors d'un déplacement. Voir [1].
CLI: « Calling Line Identity » Numéro de l'appelant qui s'affiche sur le téléphone du destinataire.
« Extension Container » : Paramètres additionnels du protocole MAP ayant une signification convenue propriétaire entre les deux entités RH et PROGRAMME STK de l'invention.
GMSC: « Gateway MSC », commutateur téléphonique permettant aussi d'obtenir des informations de mobilité par l'intermédiaire d'une connexion au réseau SS7 et d'accords d'itinérance.
GW-GMSC: « Gateway GMSC », commutateur auxiliaire de l'invention, émettant des appels sous contrôle du « Roaming Hub » et commandé par une liaison de données, notamment par Internet.
HLR « Home Location Register » Registre de Localisation Principal d'un abonné de mobile
HPLMN « Home Public Land Mobile Network » , Réseau d'abonnement d'un mobile
HPLMN nominal (abrégé HPLMNₙₒₘ), réseau qui fournit la carte SIM nominale et le numéro public de l'utilisateur A
HPLMN auxiliaire (abrégé HPLMNₐᵤₓ), celui qui fournit la carte SIM auxiliaire utilisée à l'étranger par A, sans que le numéro auxiliaire lui soit communiqué ou affiché aux destinataires de ses appels..
HPLMN_{B} , réseau d'un mobile appelé par A.
IMSI (International Mobile Subscriber Identity) : Numérotation interne (15 chiffres en général) aux réseaux de mobiles avec des codes pays différents (208 pour France au lieu de 33) de celui des numéros connus.
IMSIₐᵤₓ : le numéro IMSI de la carte SIM auxiliaire
IMSIₙₒₘ : le numéro IMSI de la carte SIM nominale
MAP (Mobility Application Part) : Protocole standard de haut niveau du GSM qui effectue tous les échanges liés à la mobilité (itinérance notamment ou « roaming » ). Il décrit notamment le service REGISTER-SS Voir [1]
MSC « Mobile Switching Center » Commutateur téléphonique mobile
MSISDN (Mobile Subscriber International Number) : Numéro « connu » du mobile connu du monde extérieur à son réseau.
Numéro appelé d'origine (« Original Called Number » dans la description des protocoles de téléphonie ISUP ou RNIS). Un message d'appel comporte 2 champs principaux: le numéro appelé, le numéro appelant (le CLI) qui s'affiche sur le terminal destinataire. Si c'est un renvoi d'appel, le numéro qui avait été appelé à l'origine est inclus avec la cause du renvoi( non réponse, occupé, etc...)
REGISTER_SS (Enregistrement de Services Supplémentaires) : Utilisé dans le GSM pour paramétrer les renvois d'appels. Dans l'invention, pour envoyer le numéro du destinataire d'un appel à RH.
RH (Roaming Hub) : L'équipement selon l'invention installé dans le réseau le réseau HPLMNₐᵤₓ.
Roaming (Itinérance) : Dispositions contractuelles et techniques permettant à un abonné de mobile, d'utiliser son téléphone dans d'autres réseaux que le sien.
Roaming Number (Abrégé RN) : Numéro d'itinérance temporaire 5-20 sec, attribué dynamiquement à chaque demande d'appel entrant par le VPLMN.
SEND AUTHENTICATION : Service du protocole MAP servant à vérifier l'authenticité de la carte SIM. Voir[1]. Dans les versions plus anciennes du protocole MAP, le service SEND PARAMETERS est utilisé à la place.
SIM (carte puce) comportant le numéro IMSI caractéristique d'un abonné et pouvant être mise dans n'importe quel téléphone GSM.
SMSC: Centre de Messages Courts (Short Message Service)
SMS-MO : message SMS envoyé par un mobile
SMS-MT : message SMS envoyé par un centre SMSC vers un mobile.
SS7 (Réseau SS7 international) : Réseau de paquets utilisés entre les réseaux de mobile pour la transmission de la signalisation.
STK (SIM Tool Kit) : Programme auxiliaire développé suivant un standard GSM et pouvant être chargé dans un mobile pour étendre ses fonctionnalités de base.
Téléservice : Services supplémentaires des utilisateurs de mobile qu'ils peuvent activer, comme le renvoi d'appel, la demande de présentation de leur numéro, etc.
UPDATE LOCATION : Service du protocole MAP servant à enregistrer dans le HLR la présence d'un abonné dans un VPLMN. Voir [1].
USSD : Service Supplémentaire d'échange conversationnel de messages en « mode session », par exemple pour la consultation du compte. Ce service n'est pas facturé par les VPLMN aux le réseau HPLMN mais est parfois barré dans les VPLMN( pour éviter le « Call Back »).
PROCESS-USSD_PROCESS_REQUEST : Service MAP permettant de faire une requête avec un texte et d'obtenir une réponse texte.
VLR (Visited Location Register) : Registre de Localisation Visitée
VPLMN (Visited Public Land Mobile Network) : Réseau visité par un mobile
VMS (Voice Mail System) : Système de Messagerie Vocale.
VMSₙₒₘ . La boîte vocale VMS de l'abonné, fournie par son réseau nominal.
VMSₐᵤₓ : Un numéro auxiliaire de la boîte vocale VMS, correspondant en réalité au commutateur GW-GMSC, qui sert seulement pour rerouter un appel vers la boîte VMSₙₒₘ d'une façon optimale.

## Revendications

1. Système de mobiles enregistrés dans un réseau, réseau nominal (HPLMNₙₒₘ) chacun avec une carte SIM, SIMₙₒₘ, et chaque mobile ayant une seconde carte SIM, (SIMₐᵤₓ appartenant à un réseau auxiliaire, HPLMNₐᵤₓ, chaque mobile pouvant utiliser au choix, sa carte nominale, SIMₙₒₘ, ou sa carte auxiliaire, SIMₐᵤₓ, avec chacune un numéro Aₙₒₘ et Aₐᵤₓ
**caractérisé en ce que** le système de mobiles
est en forme de réseau auxiliaire O comprenant
- une plateforme, RH, ayant un commutateur téléphonique mobile (MSC), un registre de localisation en visite, VLR, un registre de localisation principal (HLR) et un centre de messages courts (SMSC) ne servant qu'à la réception pour relayer des messages, SMS-MO,
- au moins un commutateur auxiliaire, GW-GMSC, installé dans chacun des pays dans lesquels le service du réseau auxiliaire est offert,
* le réseau auxiliaire ayant des accords d'itinérance avec des réseaux nominaux (HPLMNₙₒₘ) et des réseaux visités (VPLMN) ainsi que des accords avec des opérateurs du Réseau Téléphonique International RTI,
- un programme de gestion selon lequel
* la plateforme RH enregistre la localisation du mobile avec la carte SIMₐᵤₓ en visite dans un réseau (VPLMLV) et met à jour le registre, HLRₙₒₘ, du réseau nominal (HPLMNₙₒₘ) du mobile pour lui indiquer le réseau auxiliaire O comme réseau visité et plus précisément RH comme VLR puis commander un renvoi inconditionnel des appels reçus vers le commutateur auxiliaire GW-GMSC dans le but de faire passer tous les appels entrants à destination du numéro Aₙₒₘ par le commutateur auxiliaire, GW-GMSC, dans le pays du réseau nominal (HPLMNₙₒₘ), ce commutateur auxiliaire utilisant les opérateurs du réseau RTI pour l'émission des appels entrants et sortants échangés vers le mobile Aₐᵤₓ en itinerance.

2. Système selon la revendication 1,
**caractérisé en ce que**
la plateforme RH comporte certaines fonctions, à savoir celles d'un commutateur (MSC), d'un registre de localisation en visite VLR, d'un registre de localisation principal (HLR) et d'un centre de messages courts (SMSC) ne servant qu'à la réception pour relayer des messages SMS-MO d'un registre (HLR) et est installée dans le réseau auxiliaire (HPLMNₐᵤₓ) qui fournit la carte (SIMₐᵤₓ) et le commutateur auxiliaire (GW-GMSC) a des fonctions commandables à distance de commutateur téléphonique pour optimiser des appels téléphoniques reçus à l'étranger ou émis.

3. Système selon la revendication 1,
**caractérisé par**
un programme embarqué, STK, dans le mobile.

4. Système selon la revendication 2,
**caractérisé en ce que**
les appels téléphoniques vers le mobile Aₐᵤₓ qui a activé sa carte (SIMₐᵤₓ) sont automatiquement renvoyés sur le commutateur auxiliaire (GW-GMSC) le mieux placé pour l'optimisation et si celui-ci est dans le pays du mobile, le coût de tout appel reçu à l'étranger, vers leur numéro nominal, est celui d'un appel depuis leur pays vers le numéro local du commutateur auxiliaire (GW-GMSC).

5. Système selon la revendication 2,
**caractérisé en ce que**
le mobile Aₐᵤₓ avec sa carte (SIMₐᵤₓ) activée, dispose des services supplémentaires de son réseau (HPLMNₙₒₘ) et utilise le service du centre des messages courts (SMSC) de son le réseau (HPLMNₙₒₘ) lui assurant pour le service de messages SMS, la même couverture en réception et en émission qu'avec l'utilisation de la carte (SIMₙₒₘ).

6. Système selon les revendications 2 et 4,
**caractérisé en ce que**
l'adresse de messagerie vocale inscrite pour la carte (SIMₐᵤₓ) dans le registre (HLR) auxiliaire est celle du commutateur auxiliaire (GW-GMSC) du mobile Aₙₒₘ et quand un appel, émis vers lui, échoue, sa carte (SIMₐᵤₓ) ayant été activée, l'appel arrive sur ce commutateur auxiliaire (GW-GMSC), qui le renvoie automatiquement vers la messagerie vocale nominale (VMSₙₒₘ) de son réseau (HPLMNₙₒₘ) au coût d'un appel local.

7. Système selon la revendication 1,
**caractérisé en ce qu'**
un appel émis par le mobile Aₐᵤₓ en itinérance est remplacé par un rappel déclenché d'une façon gratuite et ouverte dans tout réseau dans lequel la carte SIMₐᵤₓ est activée par une fonction REGISTER-SS utilisée normalement pour programmer les renvois d'appels et qui est ouverte partout, le rappel étant effectué par le commutateur auxiliaire GW-GMSC le mieux placé pour l'optimisation des coûts qui insère comme « Calling Party Address » dans le message d'appel vers le mobile appelé, le « numéro nominal » du mobile Aₙₒₘ, le programme embarqué STK du mobile Aₐᵤₓ effectuant d'une façon cachée, les opérations nécessaires à l'établissement d'appel optimisé, ergonomie transparente.

8. Système selon les revendications 1 et 7,
**caractérisé en ce que**
l'optimisation du coût des appels vers les mobiles visitant le même pays est aussi obtenu grâce à un programme STK et à la plateforme RH, le programme STK demandant à la plateforme jRFlj, le numéro d'itinérance, RN de B, du destinataire pour effectuer un appel local vers ce numéro temporaire, la plateforme RH décidant ou non d'utiliser le procédé de rappel selon la revendication 7, la transmission entre le programme STK et la plateforme RH se faisant par un signal REGISTER-SS avec une extension pour avoir une réponse contenant le numéro d'itinérance.

9. Système selon les revendications 1 et 2,
**caractérisé en ce que**
la plateforme RH est sécurisée, lisible seulement avec des autorisations,
et est la seule à avoir les correspondances entre numéros de l'utilisateur, d'une part IMSIₙₒₘ, Aₙₒₘ, numéro nominal dans le réseau nominal HPLMNₙₒₘ, et d'autre part IMSIₐᵤₓ, Aₐᵤₓ, numéro auxiliaire dans le réseau auxiliaire HPLMNₐᵤₓ, et l'utilisateur étant connu seulement par les numéros auxiliaires IMSIₐᵤₓ, Aₐᵤₓ par le VPLMN, sans que la correspondance avec le numéro nominal soit connue du VPLMN.

10. Système selon les revendications 1, 2 et 7,
**caractérisé en ce que**
quand la procédure de rappel est utilisée, le numéro affiché d'un appel est le numéro Aₙₒₘ et l'utilisateur ne connaît pas son numéro Aₐᵤₓ.

## Claims

1. System of mobiles registered in a network, the nominal network (HPLMNₙₒₘ), each with a SIM card, SIMₙₒₘ, and each mobile having a second SIM card, SIMₐᵤₓ, belonging to an auxiliary network, HPLMNₐᵤₓ, each mobile being able to use, as preferred, its nominal card, SIMₙₒₘ, or its auxiliary card, SIMₐᵤₓ, each with a number Aₙₒₘ and Aₐᵤₓ, **characterised in that**
the system of mobiles is in the form of an auxiliary network, HPLMNₐᵤₓ, comprising
- a hub, RH, having a mobile switching centre (MSC), a visited location register (VLR), a home location register (HLR), and a short message service centre (SMSC) serving only to receive and relay messages, SMS-MO,
- at least one auxiliary switching centre, GW-GMSC, installed in each of the countries in which the service of the auxiliary network is offered,
* the auxiliary network having roaming agreements with nominal networks (HPLMNₙₒₘ) and visited networks (VPLMN) as well as agreements with operators of the International Telephone Network, RTI,
- a control program according to which
* the hub RH records the location of the mobile with the SIMₐᵤₓ card visiting a network (VPLMN) and updates the register, HLRₙₒₘ, of the nominal network (HPLMNₙₒₘ) of the mobile in order to indicate thereto the auxiliary network, HPLMNₐᵤₓ, as the visited network and more precisely RH as VLR then effect unconditional forwarding of the received calls to the auxiliary switching centre GW-GMSC with the aim of routing all incoming calls to the number Aₙₒₘ through the auxiliary switching centre, GW-GMSC, in the country of the nominal network (HPLMNₙₒₘ), the auxiliary switching centre using the operators of the RTI network for the transmission of exchanged incoming and outgoing calls to the roaming mobile Aₐᵤₓ.

2. System according to claim 1,
**characterised in that**
the hub RH includes certain functions, namely those of a switching centre (MSC), of a visited location register (VLR), of a home location register (HLR), and of a short message service centre (SMSC) serving only to receive and relay messages SMS-MO of a register (HLR), and is installed in the auxiliary network (HPLMNₐᵤₓ) which provides the card (SIMₐᵤₓ), and the auxiliary switching centre (GW-GMSC) has remotely controllable functions of a telephone switching centre in order to optimise calls received abroad or sent.

3. System according to claim 1,
**characterised by**
an embedded program, STK, in the mobile.

4. System according to claim 2,
**characterised in that**
telephone calls to the mobile Aₐᵤₓ which has activated its card (SIMₐᵤₓ) are automatically forwarded to the auxiliary switching centre (GW-GMSC) that is best placed for optimisation and, if that auxiliary switching centre is in the country of the mobile, the cost of any call received abroad, to their nominal number, is that of a call from their country to the local number of the auxiliary switching centre (GW-GMSC).

5. System according to claim 2,
**characterised in that**
the mobile Aₐᵤₓ with its activated card (SIMₐᵤₓ) has available the supplementary services of its network (HPLMNₙₒₘ) and uses the short messaging service centre (SMSC) of its network (HPLMNₙₒₘ), ensuring for the short message service SMS the same coverage in terms of reception and transmission as when the card (SIMₙₒₘ) is used.

6. System according to claims 2 and 4,
**characterised in that**
the voice mail address registered for the card (SIMₐᵤₓ) in the auxiliary register (HLR) is that of the auxiliary switching centre (GW-GMSC) of the mobile Aₙₒₘ, and when a call sent thereto fails, its card (SIMₐᵤₓ) having been activated, the call arrives at the auxiliary switching centre (GW-GMSC), which automatically forwards it to the nominal voice mail system (VMSₙₒₘ) of its network (HPLMNₙₒₘ) for the cost of a local call.

7. System according to claim 1,
**characterised in that**
a call sent by the roaming mobile Aₐᵤₓ is replaced by a call back triggered in a free and open manner in any network in which the SIMₐᵤₓ card is activated by a REGISTER-SS function normally used for programming the forwarding of calls and which is open everywhere, the call back being effected by the auxiliary switching centre GW-GMSC that is best placed for optimisation of the costs, which inserts as the "Calling Party Address" in the call message to the called mobile the "nominal number" of the mobile Aₙₒₘ, the embedded program STK of the mobile Aₐᵤₓ effecting in a hidden manner the operations necessary to establish an optimised call, transparent ergonomy.

8. System according to claims 1 and 7,
**characterised in that**
optimisation of the cost of calls to mobiles visiting the same country is also obtained by virtue of a program STK and the hub RH, the program STK requesting from the hub RH the roaming number, RN of B, of the recipient in order to make a local call to that temporary number, the hub RH deciding whether or not to use the call back process according to claim 7, the transmission between the program STK and the hub RH being made by a REGISTER-SS signal with an extension so that a reply containing the roaming number is obtained.

9. System according to claims 1 and 2,
**characterised in that**
the hub RH is secure, readable only with authorisation, and is the only one to have the correspondences between, on the one hand, numbers of the user, IMSIₙₒₘ, Aₙₒₘ, nominal number in the nominal network HPLMNₙₒₘ, and, on the other hand, IMSIₐᵤₓ, Aₐᵤₓ, auxiliary number in the auxiliary network (HPLMNₐᵤₓ), and the user being known to the VPLMN only by the auxiliary numbers IMSIₐᵤₓ, Aₐᵤₓ, without the correspondence with the nominal number being known to the VPLMN.

10. System according to claims 1, 2 and 7,
**characterised in that**
when the call back procedure is used, the number of a call that is displayed is the number Aₙₒₘ, and the user does not know his number Aₐᵤₓ.

## Patentansprüche

1. System von Mobiltelefonen, die in einem Netz - Nennnetz (HPLMNₙₒₘ), jeder mit einer SIM-Karte SIMₙₒₘ - angemeldet sind, wobei jedes Mobiltelefon eine zweite einem Hilfsnetz HPLMNₐᵤₓ gehörende SIM-Karte (SIMₐᵤₓ) hat, jedes Mobiltelefon wahlweise seine Nennkarte SIMₙₒₘ oder seine Hilfskarte SIMₐᵤₓ nutzen kann, und wobei jede Karte eine Nummer Aₙₒₘ bzw. Aₐᵤₓ hat,
**dadurch gekennzeichnet, dass** das System vom Mobiltelefonen in Form eines Hilfsnetzes HPLMNₐᵤₓ ist, beinhaltend
- eine Platform RH mit einem mobilen Telefonumschalter (MSC), einem Besuchortungsregister VLR, einem Hauptortungsregister (HLR) und/oder einem Kurzmitteilungszentrum (SMSC), das nur zum Weiterleiten der Mitteilungen SMS-MO bei Empfang dient,
- mindestens einen Hilfsschalter GW-GMSC, der in jedem der Länder installiert ist, in denen der Dienst des Hilfsnetzes angeboten wird,
❖ wobei das Hilfsnetz Roamingverträge mit Nennnetzen (HPLMNₙₒₘ) und besuchten Netzen (VPLMN) sowie Vereinbarungen mit Dienstanbietern des Internationalen Telefonischen Netz RTI hat,
- ein Verwaltungsprogramm, nach dem
❖ die Plattform RH den Ort des Mobiltelefons bei Besuch in einem Netz (VPLMN) mit der SIMₐᵤₓ Karte speichert, und das Register HLRₙₒₘ des Nennnetzes (HPLMNₙₒₘ) des Mobiltelefons auf den letzten Stand setzt, um ihm das Hilfsnetz HPLMNₐᵤₓ als besuchtes Netz und genauer RH als VLR anzuzeigen, und danach eine bedingungslose Rücksendung der empfangenen Rufe zu dem Hilfsschalter GW-GMSC mit dem Ziel zu bewirken, alle zu der Nummer Aₙₒₘ eingehenden Rufe durch den Hilfsschalter GW-GMSC in das Land des Nennnetzes (HPLMNₙₒₘ) zu übertragen, wobei dieser Hilfsschalter für das Senden der ein- und ausgehenden mit dem im Roaming befindlichen Mobiltelefon Aₐᵤₓ ausgetauschten Rufe die Dienstanbieter des RTI Netzes heranzieht.

2. System nach Anspruch 1,
**dadurch gekennzeichnet, dass**
die Plattform RH bestimmte Funktionen und zwar diejenigen eines Schalters (MSC), eines Besuchortungsregisters VLR, eines Hauptortungsregisters (HLR) und eines Kurzmeldungszentrum (SMSC) aufweist, das nur beim Empfang zum Weiterleiten der Mitteilungen SMS-MO eines Registers (HLR) dient, und in dem Hilfsnetz (HPLMNₐᵤₓ) installiert ist, das die Karte (SIMₐᵤₓ) liefert, wobei der Hilfsschalter GW-GMSC fern steuerbare Funktionen eines Telefonumschalters hat, um im Ausland empfangene oder ausgesendete Rufe zu optimieren.

3. System nach Anspruch 1,
**gekennzeichnet durch**
ein Programm an Bord STK in dem Mobiltelefon.

4. System nach Anspruch 2,
**dadurch gekennzeichnet, dass**
die Telefonanrufe zu demjenigen Mobiltelefon Aₐᵤₓ, das seine Karte (SIMₐᵤₓ) aktiviert hat, automatisch an denjenigen Hilfsschalter GW-GMSC zurückgesendet werden, der für die Optimierung am besten platziert ist, und, wenn dieser in dem Land des Mobiltelefons befindlich ist, dass die Kosten eines jeden im Ausland zu ihrer Nennnummer empfangenen Rufes diejenigen einer Rufes aus ihrem Land zu der lokalen Nummer des Schalter GW-GMSC sind.

5. System nach Anspruch 2,
**dadurch gekennzeichnet, dass**
das Mobiltelefon Aₐᵤₓ mit seiner aktivierten Karte (SIMₐᵤₓ) über die Zusatzdienste seines Netzes (HPLMNₙₒₘ) verfügt und den Dienst der Zentrale für kurze Mitteilungen (SMSC) seines Netzes (HPLMNₙₒₘ) nutzt, welcher ihm für den SMS Mitteilungsdienst die gleiche Abdeckung für den Empfang und die Aussendung wie mit der Nutzung de Karte (SIMₙₒₘ) gewährleistet.

6. System nach Anspruch 2 und 4,
**dadurch gekennzeichnet, dass**
die für die Karte (SIMₐᵤₓ) in das Hilfsregister (HLR) eingetragene Adresse der Sprachmailbox diejenige des Hilfsschalter GW-GMSC des Mobiltelefons Aₙₒₘ ist, und wenn ein zu ihm gesendeter Ruf misslingt, wobei seine Karte (SIMₐᵤₓ) aktiviert gewesen war, so kommt der Anruf auf diesen Schalter (GW-GMSC), der den Anruf automatisch an die Nennsprachmailbox (VMSₙₒₘ) ihres Netzes (HLPMNₙₒₘ) zu den kosten eines Ortsanrufes weiterleitet.

7. System nach Anspruch 1,
**dadurch gekennzeichnet, dass**
ein vom im Roaming befindlichen Mobiltelefon Aₐᵤₓ gesendeter Ruf durch einen kostenlos und offen im ganzen Netz, in dem die Karte SIMₐᵤₓ aktiviert ist, von einer Funktion REGISTER-SS ausgelösten Rückruf ersetzt wird, welche normalerweise zum Programmieren der Rufrücksendungen verwendet wird und überall offen ist, wobei der Rückruf von dem für die Kostenoptimierung am besten platzierten Schalter GW-GMSC ausgeführt wird, welcher in die Rufmeldung zu dem gerufenen Mobiltelefon die "Nennnummer" des Mobiltelefons Aₙₒₘ als "Calling Party Address" einfügt, wobei das An Bord Programm STK des Mobiltelefons Aₐᵤₓ die zu der Zusammenschaltung eines optimierten Rufes nötigen Eingriffen im Sinne einer transparenten Ergonomie verdeckt ausführt.

8. System nach Anspruch 1 und 7,
**dadurch gekennzeichnet, dass**
die Rufkostenoptimierung an die das selbe Land besuchenden Mobiltelefonen auch dank einem Programm STK und der Plattform RH erhalten wird, wobei das Programm STK von der Plattform RH die Roamingnummer RN von B des Empfängers erfragt, damit es einen Ortsruf zu dieser temporären Nummer tätigt, wobei die Plattform RH entscheidet, ob sie das Rückrufverfahren nach Anspruch 7 verwendet, oder nicht, wobei die Übertragung zwischen dem Programm STK und der Plattform RH durch ein REGISTER-SS Signal mit Erweiterung erfolgt, damit eine Antwort erhalten wird, die die Roamingnummer enthält.

9. System nach Anspruch 1 und 2,
**dadurch gekennzeichnet, dass**
die Plattform RH abgesichert und nur mit Genehmigungen lesbar ist, und die einzige ist, die die Entsprechungen zwischen den Benutzernummern
- IMSIₙₒₘ, Aₙₒₘ, Nennnummer im Nennnetz HPLMNₙₒₘ einerseits und IMSIₐᵤₓ, Aₐᵤₓ, Hilfsnummer im Hilfsnetz HPLMNₐᵤₓ andererseits kennt, wobei der Benutzer nur über den Hilfsnummern IMSIₐᵤₓ, Aₐᵤₓ vom VPLMN bekannt ist, ohne dass die Entsprechung zu der Nennnummer vom VPLMN bekannt wäre.

10. System nach Anspruch 1, 2 und 7,
**dadurch gekennzeichnet, dass**,
wenn die Rückrufprozedur verwendet wird, die angezeigte Nummer eines Anrufes die Nummer Aₙₒₘ ist, und der Benutzer seine Aₐᵤₓ Nummer nicht kennt.
